# FASCICULE DE BREVET EUROPEEN

(11) **EP 1 291 237 B1**
(45) Date de publication et mention de la délivrance du brevet: **18.01.2006**
(21) Numéro de dépôt: 02292008.6
(22) Date de dépôt: 09.08.2002
(51) Int. Cl.: B60N 2/427, B60R 7/04

(54) **Structure de siège de véhicle automobile comportant un boîtier**
Kraftfahrzeug-Sitzstruktur mit einem Gehäuse
Automotive vehicle seat structure provided with an enclosure

(30) Priorité: 03.09.2001 FR 0111354
(43) Date de publication de la demande: 12.03.2003
(73) Titulaire: Renault s.a.s., 92100 Boulogne Billancourt (FR)
(72) Inventeur: Giraud, Alain, 92160 Antony (FR); Massa, Xavier, 95110 Sannois (FR); Pruvot, Hervé, 78170 La Celle Saint Cloud (FR)

(56) Documents cités:
- FR-A- 2 798 629
- PATENT ABSTRACTS OF JAPAN vol. 2000, no. 22, 9 mars 2001 (2001-03-09) -& JP 2001 120385 A (IKEDA BUSSAN CO LTD), 8 mai 2001 (2001-05-08)

## Description

L'invention concerne une structure de siège de véhicule automobile comportant un boîtier, en particulier un boîtier d'appareillage électronique.

L'espace à l'intérieur d'un véhicule automobile est de plus en plus utilisé par de nombreux accessoires, et par ailleurs, les concepteurs ont l'objectif de laisser un maximum de place pour les utilisateurs. De plus, il est souhaitable de placer certains appareillages au plus près des utilisateurs, ou au plus près d'organes auxquels l'appareillage est relié. C'est le cas par exemple de lecteurs audio ou multimédia tels qu'un lecteur DVD, un récepteur radio. C'est également le cas pour des calculateurs de mise à feu de coussins gonflables ou de tensionneurs de ceinture de sécurité.

Une place utilisée pour ces appareillages est l'espace libre sous un siège, que ce soit à l'avant ou à l'arrière d'un véhicule. Dans le cas d'un lecteur de disque par exemple, l'utilisateur dispose d'une commande, séparée du lecteur, pour ouvrir un tiroir du lecteur, et ainsi y déposer ou retirer un disque, et d'une commande pour refermer le tiroir.

Un problème se pose lorsque le siège comporte un dispositif anti-soumarinage. Un tel dispositif comporte par exemple une traverse anti-soumarinage dans l'assise du siège qui bloque le bassin du passager en cas d'accident. Pour limiter les efforts entre la traverse et le bassin du passager, la traverse est couramment montée, de manière connue en soi, pour accepter un déplacement ou pour se déformer et ainsi absorber de l'énergie. Dans certaines configurations, il pourrait arriver que l'appareillage soit placé sur la trajectoire de la traverse anti-soumarinage. En cas de déplacement de la traverse, l'appareillage risque donc de gêner la déformation ou le déplacement de la traverse anti-soumarinage.

C'est donc un objectif de l'invention que de proposer une structure de siège de véhicule automobile avec une traverse antisoumarinage qui se déplace lors d'un accident et un appareillage qui n'oppose qu'une faible résistance à ce déplacement.

Avec ces objectifs en vue, l'invention a pour objet une structure de siège de véhicule automobile comportant un boîtier, un support de boîtier qui lie le boîtier à la structure, une traverse antisoumarinage qui se déplace ou se déforme selon une trajectoire prédéterminée en cas de choc sur le véhicule, le boîtier étant placé sur la trajectoire prédéterminée, caractérisé en ce que le support du boîtier comporte des moyens de retenue autorisant le déplacement du boîtier sous l'effet du déplacement ou de la déformation de la traverse antisoumarinage.

Grâce à l'invention, le boîtier qui contient un appareillage n'est pas écrasé par la traverse antisoumarinage qui se déplace lors d'un choc, mais au contraire, le boîtier s'escamote et est repoussé au-delà de sa place d'origine sans subir d'écrasement ou de contrainte importante. De plus, il n'oppose qu'une faible résistance, et le déplacement ou la déformation de la traverse antisoumarinage n'est pas empêchée ni gênée.

Selon un mode de réalisation préférentiel, les moyens de retenue comportent au moins un pion fixé sur le boîtier et dont l'axe est sensiblement perpendiculaire à la trajectoire prédéterminée, une platine comportant une rainure de direction sensiblement parallèle à la trajectoire prédéterminée et dans laquelle le pion coulisse, la platine comportant un doigt qui agit sur le pion dans une direction opposée à la trajectoire prédéterminée, le doigt s'escamotant lorsque la traverse antisoumarinage entraîne le déplacement du boîtier.

On réalise ainsi de manière simple le maintien en position du boîtier, tout en préservant la possibilité de son déplacement. En effet, le doigt agit sur le pion pour s'opposer au déplacement du boîtier et le maintient ainsi en appui dans la rainure. Par contre, quand la traverse antisoumarinage repousse le boîtier, le doigt recule et s'escamote, libérant ainsi complètement le boîtier qui coulisse dans la rainure.

De manière préférentielle, le doigt agit sur le pion de manière élastique. La déformation du doigt est donc réversible.

Avantageusement, le doigt agit dans une direction oblique à la trajectoire prédéterminée. L'escamotage du doigt est ainsi plus progressif, celui-ci opposant une force plus régulière sur le pion.

De préférence, le doigt et la rainure sont découpés dans la platine, le doigt comportant un levier sensiblement parallèle à la direction de la rainure, et un ergot faisant saillie dans la rainure et ayant deux faces obliques par rapport à ladite direction.

Les faces obliques viennent en contact avec le pion quand il coulisse dans la rainure, avec une première face dans le sens du montage, et avec la deuxième face dans le sens du déplacement dû au choc. La réalisation du doigt et de la rainure est ainsi très simple.

L'invention sera mieux comprise et d'autres particularités et avantages apparaîtront à la lecture de la description qui va suivre, la description faisant référence aux dessins annexés parmi lesquels :
- la figure 1 est une vue en perspective d'une structure conforme à l'invention et comportant un boîtier placé sous l'assise d'un siège devant une tôle anti-soumarinage ;
- la figure 2 est une vue de côté du boîtier et de son système de fixation.

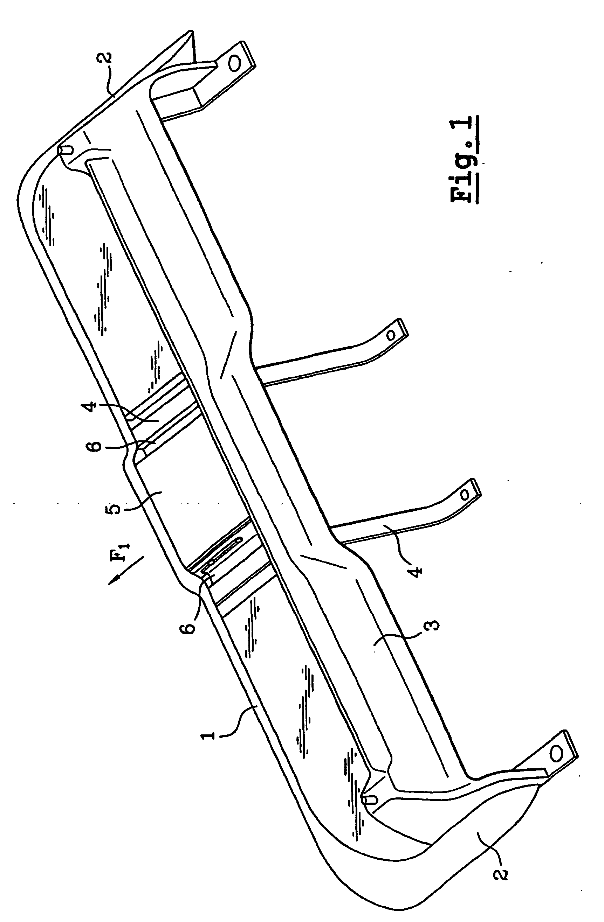

La figure 1 représente la structure sous-jacente d'un siège arrière d'un véhicule qui comporte une traverse avant 1, deux branches latérales 2 et une tôle anti-soumarinage 3 parallèle à la traverse avant 1, la structure ayant sensiblement une forme rectangulaire. La traverse avant 1 a une direction transversale au véhicule tandis que les branches 2 ont une direction longitudinale. La structure comporte également deux branches intermédiaires 4 qui relient la traverse avant 1 et la tôle anti-soumarinage 3. La traverse avant 1 comporte entre les deux branches intermédiaires 4 une ouverture 11 rectangulaire. Un boîtier 5 contenant un appareillage électronique, par exemple un lecteur de DVD, est placé entre les deux branches intermédiaires de telle sorte que sa face avant est affleurante à la traverse avant 1 au niveau de l'ouverture 11. Le support du boîtier 5 est fixé sur les branches intermédiaires 4 par deux platines 6.

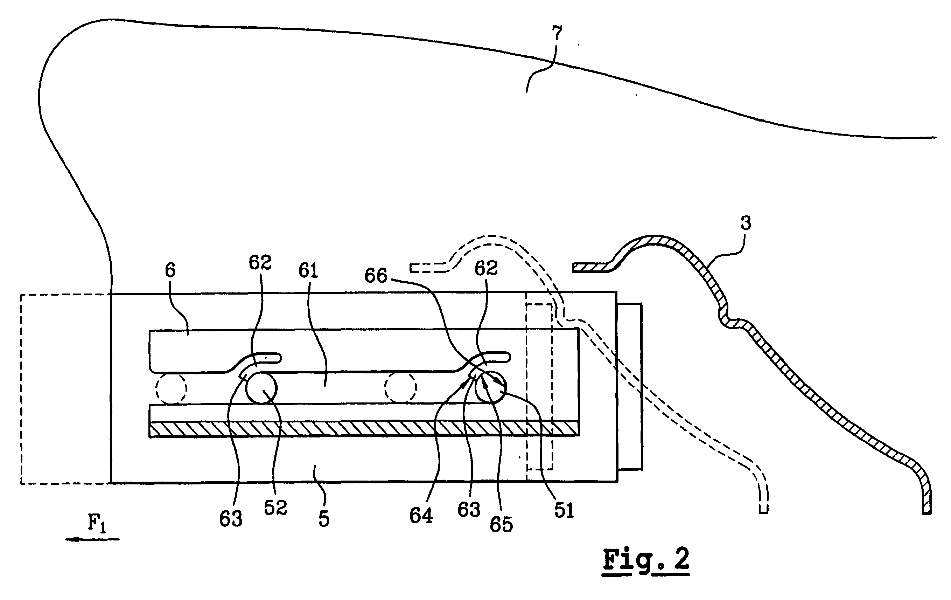

En se référant à la figure 2, le boîtier 5 est montré sous l'assise 7 du siège. Une platine 6, fixée sur une branche intermédiaire 4 par des moyens non montrés, comporte une rainure 61 découpée dans la direction longitudinale du véhicule et débouchante dans le sens de la flèche F1 vers l'avant du véhicule. La platine 6 comporte également deux leviers 62 à proximité des extrémités de la rainure 61 de la direction sensiblement parallèle à la rainure 61 et dont une extrémité libre comporte un ergot 63 faisant saillie dans la rainure 61. L'ergot 63 comporte une première face 64 et une deuxième face 65 obliques par rapport à la direction de la rainure 61, la première face 64 étant dirigée vers l'ouverture 11, la deuxième face 65 étant dirigée vers la tôle anti-soumarinage 3.

Le boîtier 5 comporte sur chacune des deux faces parallèles aux branches intermédiaires 4 deux pions faisant saillie et coopérant avec la rainure 61 de chancune des platines 6. Le premier pion 51 est plus proche de la tôle anti-soumarinage 3 que le deuxième pion 52. Le premier pion 51 est en contact avec le fond 66 non débouchant de la rainure 61.

Lors de la mise en place du boîtier 5, celui-ci est introduit par l'ouverture 11 de telle sorte que les pions 51 s'introduisent et glissent dans les rainures 61. Pendant le glissement dans la rainure 61, les pions 51 rencontrent les ergots 63 en venant en contact avec la première face 64. Le pion 51 glisse alors sur le première face 64 et l'ergot 63 s'escamote par le fléchissement du levier 62. Après le passage de deux ergots par le premier pion 51, celui-ci arrive en contact avec le fond 66 de la rainure, ce qui bloque la possibilité de translation du boîtier 5 vers l'arrière. Dans cette position, les pions 51, 52 sont en contact avec les ergots par les deuxièmes faces 65 qui, sous l'action du levier 62, appuient les pions 51, 52 vers le fond 66 de la rainure et maintiennent ainsi le boîtier 5 en position.

En cas de choc frontal sur le véhicule et si un passager occupe le siège au-dessus du boîtier, la tôle anti-soumarinage se déforme dans le sens de la flèche F1 sous l'action du bassin du passager jusque dans une position représentée en traits mixtes. Lors de cette déformation, la tôle 3 vient en contact avec la face arrière 53 du boîtier 5 et pousse celui-ci vers l'avant. Le mouvement est transmis aux pions 51, 52 qui repoussent les leviers 62 en appuyant sur les deuxièmes faces 65. Les ergots 63 s'escamotent de manière élastique et le boîtier ne s'oppose pas à la translation de la tôle anti-soumarinage.

L'invention n'est pas limité au mode de réalisation qui a été décrit uniquement à titre d'exemple. On pourra maintenir le boîtier par d'autres moyens élastiques ou absorbant de l'énergie. La structure de siège peut comporter une barre antisoumarinage, éventuellement articulée sur les traverses à la place de la tôle.

## Revendications

1. Structure de siège de véhicule automobile comportant un boîtier (5), un support de boîtier (6) qui lie le boîtier (5) à la structure, une traverse antisoumarinage (3) qui se déplace ou se déforme selon une trajectoire prédéterminée en cas de choc sur le véhicule, le boîtier (5) étant placé sur la trajectoire prédéterminée, **caractérisée en ce que** le support (6) du boîtier comporte des moyens de retenue (51, 52, 62, 63) autorisant le déplacement du boîtier (5) sous l'effet du déplacement ou de la déformation de la traverse antisoumarinage (3).

2. Structure selon la revendication 1, **caractérisée en ce que** les moyens de retenue comportent au moins un pion (51, 52) fixé sur le boîtier (5) et dont l'axe est sensiblement perpendiculaire à la trajectoire prédéterminée, uen platine (6) comportant une rainure (61) de direction sensiblement parallèle à la trajectoire prédéterminé et dans laquelle le pion (51, 52) coulisse, la platine (6) comportant un doigt (62, 63) qui agit sur le pion (51, 52) dans une direction opposée à la trajectoire prédéterminée, le doigt (62, 63) s'escamotant lorsque la traverse antisoumarinage (3) entraîne le déplacement du boîtier (5).

3. Structure selon la revendication 2, **caractérisée en ce que** le doigt (62) agit sur le pion (51, 52) de manière élastique.

4. Structure selon la revendication 2,
**caractérisée en ce que** le doigt (62) agit dans une direction oblique à la trajectoire prédéterminée.

5. Structure selon la revendication 4, **caractérisée en ce que** le doigt (62) et la rainure (61) sont découpés dans la platine (6), le doigt comportant un levier (62) sensiblement parallèle à la direction de la rainure (61), et un ergot (63) faisant saillie dans la rainure (62) et ayant deux faces obliques (64, 65) par rapport à ladite direction.

6. Structure selon la revendication 1, **caractérisée en ce que** le boîtier (5) contient un appareillage électronique.

## Patentansprüche

1. Struktur eines Kraftfahrzeugsitzes aufweisend ein Gehäuse (5), einen Gehäuseträger (6), welcher das Gehäuse (5) mit der Struktur verbindet, einen Durchtauchverhinderungsquerträger (3), welcher sich gemäß einer vorherbestimmten Bahn im Falle eines Aufpralls auf das Fahrzeug verlagert oder verformt, wobei das Gehäuse (5) auf die vorherbestimmte Bahn gesetzt ist, **dadurch gekennzeichnet, dass** der Träger (6) des Gehäuses Haltemittel (51, 52, 62, 63) aufweist, welche die Verlagerung des Gehäuses (5) unter der Wirkung der Verlagerung oder der Verformung des Durchtauchverhinderungsquerträgers (3) erlauben.

2. Struktur nach Anspruch 1, **dadurch gekennzeichnet, dass** die Haltemittel mindestens einen Klotz (51, 52) ausweisen, der an dem Gehäuse (5) befestigt ist und dessen Achse im Wesentlichen senkrecht zur vorherbestimmten Bahn ist, eine Platte (6), welche eine Nut (61) einer Richtung im Wesentlichen parallel zur vorherbestimmten Bahn aufweist und in welcher der Klotz (51, 52) gleitet, wobei die Platte (6) einen Finger (62, 63) ausweist, welcher auf den Klotz (51, 52) in einer Richtung entgegengesetzt zu der vorherbestimmten Bahn wirkt, wobei sich der Finger (62, 63) zurückzieht, wenn der Durchtauchverhinderungsquerträger (3) die Verlagerung des Gehäuses (5) bewirkt.

3. Struktur nach Anspruch 2, **dadurch gekennzeichnet, dass** der Finger (62) auf den Klotz (51, 52) auf elastische Art und Weise wirkt.

4. Struktur nach Anspruch 2, **dadurch gekennzeichnet, dass** der Finger (62) in einer schrägen Richtung zur vorherbestimmten Bahn wirkt.

5. Struktur nach Anspruch 4, **dadurch gekennzeichnet, dass** der Finger (62) und die Nut (61) in der Platte (6) ausgestanzt sind, wobei der Finger einen Hebel (62) im Wesentlichen parallel zur Richtung der Nut (61) aufweist und einen Vorsprung (63), der in die Nut (62) vorragt und zwei im Verhältnis zu der Richtung schräge Flächen (64, 65) aufweist.

6. Struktur nach Anspruch 1, **dadurch gekennzeichnet, dass** das Gehäuse (5) ein elektronisches Gerät enthält.

## Claims

1. A motor vehicle seat structure comprising a box (5), a box support (6) which connects the box (5) to the structure, an anti-submarining cross member (3) which is displaced or deformed in accordance with a predetermined trajectory in the event of impact against the vehicle, the box (5) being placed on the predetermined trajectory, **characterised in that** the support (6) of the box comprises retaining means (51, 52, 62, 63) allowing displacement of the box (5) under the effect of the displacement or deformation of the anti-submarining cross member (3).

2. A structure according to claim 1 **characterised in that** the retaining means comprise at least one pin (51, 52) which is fixed on the box (5) and the axis of which is substantially perpendicular to the predetermined trajectory, a plate (6) comprising a groove (61) which is in a direction substantially parallel to the predetermined trajectory and in which the pin (51, 52) slides, the plate (6) comprising a finger (62, 63) which acts on the pin (51, 52) in a direction opposite to the predetermined trajectory, the pin (62, 63) retracting when the anti-submarining cross member (3) causes displacement of the box (5).

3. A structure according to claim 2 **characterised in that** the finger (62) acts elastically on the pin (51, 52).

4. A structure according to claim 2 **characterised in that** the finger (62) acts in an inclined direction with respect to the predetermined trajectory.

5. A structure according to claim 4 **characterised in that** the finger (62) and the groove (61) are cut out in the plate (6), the finger comprising a lever (62) substantially parallel to the direction of the groove (61) and a lug (63) projecting into the groove (62) and having two faces (64, 65) which are inclined with respect to said direction.

6. A structure according to claim 1 **characterised in that** the box (5) contains an item of electronic equipment.
